# EUROPEAN PATENT APPLICATION

(11) **EP 1 123 768 A2**
(43) Date of publication of application: **16.08.2001**
(21) Application number: 01660029.8
(22) Date of filing: 08.02.2001
(51) Int. Cl.: B23D 47/00

(54) **Blade guide for a saw machine**

(30) Priority: 08.02.2000 FI 20000255
(71) Applicant: Rummakko Oy, 40700 Jyväskylä (FI)
(72) Inventor: Paananen, Reijo, 40520 Jyväskylä (FI)
(74) Representative: Helke, Kimmo Kalervo

(57) **Abstract**

The invention relates to a blade guide for a saw machine, which saw machine includes one or several blades (14), the blade guide (17) being arranged to extend on both sides of which. The blade guide (17) includes a guide frame (20) and at least one guide piece (19) to be pressed against the blade (14). There is a through hole (22) in the guide piece (19) for leading a lubricant (24) between the guide piece (19) and the blade (14). A pressure pocket (25) is arranged in the side (19') of the guide piece (19) facing the blade (14) to form an fully covering lubricant layer (26) between the blade (14) and the guide piece (19).

## Description

The present invention relates to a blade guide for a saw machine, which saw machine includes one or several blades, the blade guide being arranged to extend on both sides to guide the blade during sawing, and which blade guide includes a guide frame equipped with a series of lubrication channels and having in it at least one guide piece to be pressed against the blade, in which there is a through hole for leading the lubricant through the series of lubrication channels in the guide frame between the guide piece and the blade.

Blade guides according to the preface are in general use in saw machines intended to saw raw timber. In such saw machines reducing and edging is usually followed by resawing, which is carried out by several circular saw blades simultaneously. The circular saw blades cut several smaller pieces from the block of timber and for this purpose the circular saw blades are fitted parallel to each other on a common axle. Circular saw blades are, however, characterized by axial throw during sawing, due to which blade guides are used for the precise purpose of keeping the blades in their correct positions. In known blade guides, a guide frame, in which one or several guides pieces are set on both sides of the blade, extends on both sides of each blade. Each guide piece is raised from the guide frame so that the blade will not come in contact with the guide frame. In addition, there is a through hole in the guide piece, through which lubricant is led between the guide piece and the blade. For this purpose, there is also a suitable series of lubricant channels in the guide frame. Usually, a mixture of compressed air and water is used as the lubricant, which not only lubricates but also cools the blade.

In known guide pieces, the surface lying against the blade is completely flat. The through hole opens onto the flat surface, so that lubricants spreads between the guide piece and the blade. However, the lubricant spreads as an uneven and thin layer, so that the blade repeatedly comes in contact with the guide piece, due to the axial throw of the blade. Thus the blade wears, causing the lubricant to spread even more unevenly. Lubrication and cooling can be improved by increasing the volume flow of the lubricant, but this also increases the consumption of lubricant uneconomically. Correspondingly, due to the uneven loading, the blade gives between the opposing guide pieces, which worsens the quality and end result of the sawing. In other words, the surface quality and yield of the sawn goods are poor. The wear also increases the need to service the blade guides.

The present invention is intended to create a more durable and reliable blade guide for a saw machine, by means of which the blade can be guided more precisely. The characteristic features of the blade guide according to the invention are stated in the accompanying Claim 1. By means of the blade guide according to the present invention and particularly of the guide piece according to the invention set in it, a fully covering layer of lubricant is created between the blade and the guide piece. Thus the blade seldom comes in contact with the guide piece, thus reducing wear in the guide piece. At the same time, the heating of the blade is reduced. Thanks to the full and continuous layer of lubricant, the blade can be supported more precisely at the desired point. This reduces the blade's oscillation, which improves the finish from the blade and the yield of sawn goods from the saw machine. In addition, the minimal wear in the blade results in a minimal need for servicing.

In the following, the invention is described with reference to the accompanying drawing showing certain applications of the invention, in which
- Figure 1a: shows a top view of part of the saw machine and a blade guide according to the invention,
- Figure 1b: shows a side view of the saw machine of Figure 1a,
- Figure 2: shows a partial cross-section of the blade guide according to the invention,
- Figure 3: shows the blade guide according to the invention as in Figure 2 in operation,
- Figure 4a: shows a perspective view of the guide piece of the blade guide according to the invention, from beneath, Figure 4b shows a side view of the guide piece of Figure 4a,
- Figure 5a: shows another application of the guide piece of the blade guide according to the invention, according to Figure 4a,
- Figure 5b: shows the first part of third application of the guide piece of the blade guide according to the invention according to Figure 4a,
- Figure 5c: shows the second part of the application of Figure 5b.

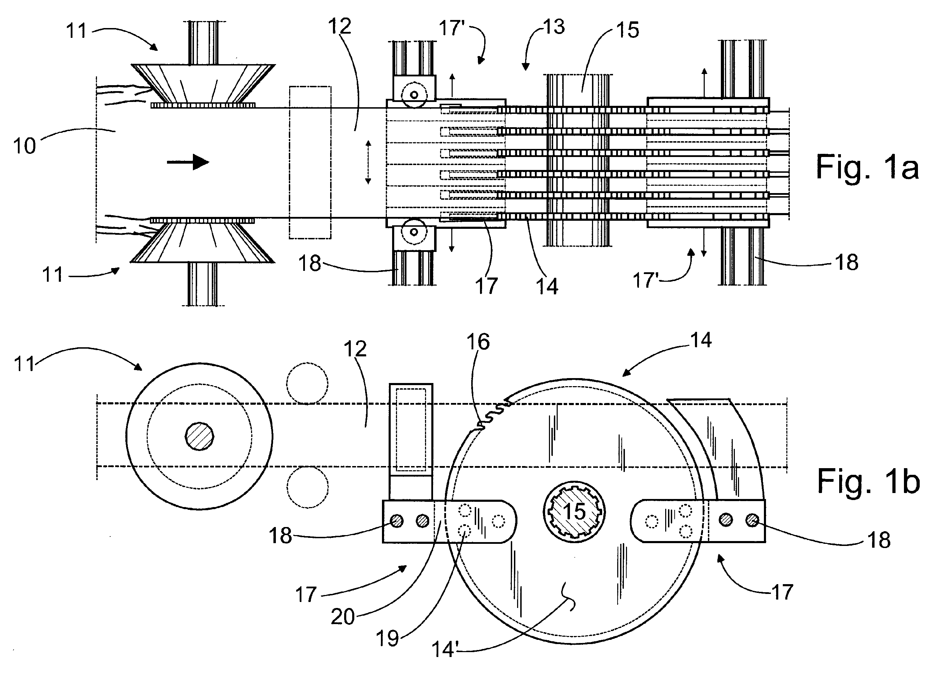

Figure 1a shows one saw machine, which is intended for sawing raw timber 10. The figure does not show the operating devices or the casing of the saw machine. In Figures 1a and 1b, the direction of sawing is from left to right and it is shown by a horizontal arrow. The sawing of raw timber 10 is started using a so-called reducing chipper 11 to even the sides of the raw timber 10. In addition to the horizontal reducing chippers 11 shown, vertical reducing chippers can also be used, in which case the raw timber will be converted into a square block. In the embodiment, after the reducing chippers there are the actual resawing blades 13, by means of which the block of timber 12 is divided into several thinner sawn goods. The resawing blades 13 are usually circular saw blades 14 according to Figures la and 1b. The circular saw blades, hereinafter referred to more simply as blades 14, are fitted to a common axle 15 at the desired distance from each other. Only some of the teeth 16 of the blade 14 in Figure 1b are shown. In practice, there are teeth around the entire circumference of the blade.

As is known, a circular saw blade is relatively flexible axially. In order to achieve good sawing quality and precision, there are blade guides 17 in the saw machine, by means of which the blade 14 is guided during sawing. The distance between the actual resawing blades 13 is set by means of adjustment members (not shown) fitted to the axle 15. The blade guide 17 extends to both sides of the blade 14, so that the axial throw of the blade 14 can be limited. In Figure la, six parallel blades 14 are fitted to the axle 15, there being one blade guide 17 for each one of them, both in front of and behind the axle 15. In most saw machines, there is a blade guide only in front of the axle. The blade can thus be guided at the point at which the blade strikes the block of timber.

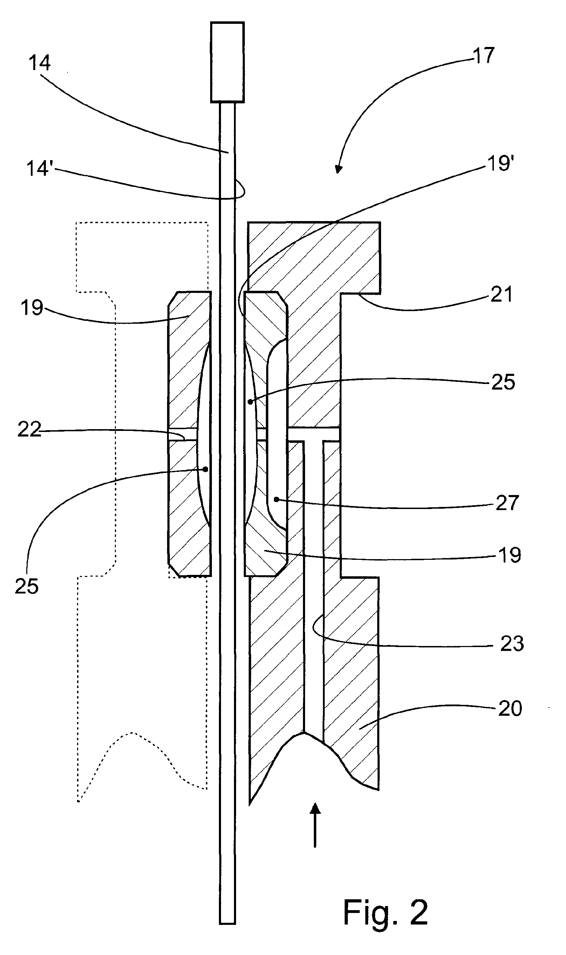

In Figures la and 1b, blade guides 17 are secured to each other to form a single blade guide unit 17', which can be moved laterally along guides 18. The lateral movement is shown by vertical arrows in Figure la. Generally, there is at least one guide piece 19 on both sides of the blade 14. In the blade guide 17 in Figure 1b, there are three guide pieces 19, the construction of which is described in greater detail in connection with Figures 2 - 5c. In this case, two guide pieces 19 are fitted close to the circumference of the blade 14, with the third in the middle of the blade 14. In normal operation, the outer guide pieces guide the blade. The inner guide piece is mainly required in curve sawing, in which the blades tend to bend, especially when raw timber is being fed according to its curvature.

Figure 2 shows a part of the blade guide 17 according to the invention. The blade guide 17 includes a guide frame 20 and in it, on both sides of the blade 14, at least one guide piece 19 to be pressed against the blade 14. There are also suitable holes 21 for securing the guide piece 19 to the guide frame 20.

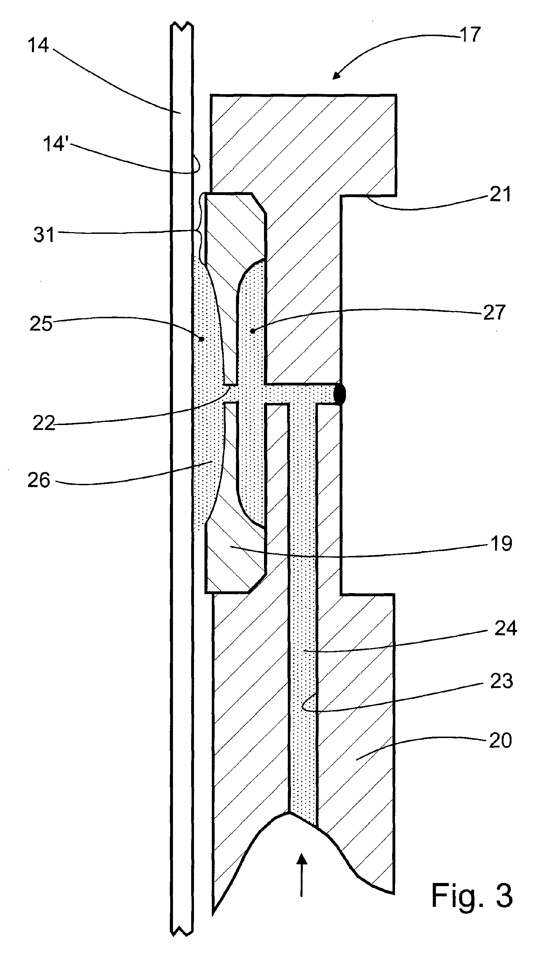

According to Figure 2, the guide piece 19 is higher than the surface of the guide frame 20, so that the blade 20 can only strike the guide piece 19. Figures 2 and 3 show only a single blade 14, but the operating principle of the blade guide is the same for one or several blades. Correspondingly, Figures 2 and 3 show only the area around a single guide piece 19. However, the operation of the other guide pieces corresponds to that shown. A guide piece made from a wear-resistant material will last for some time even without lubrication, but in practice lubrication is essential. For this purpose, there is a through hole 22 in the guide piece 19, to guide the lubricant 24 between the guide piece 19 and the blade 14, through the series of lubricant channels 23 in the guide frame 20. The lubricant also cools the blade and the guide piece.

The problem with the prior art has been the oscillation of the blade and the wear of the guide piece, despite lubrication. In the guide piece 19 according to the invention, a pressure pocket 25 is arranged in the surface 19' on the blade 14 side of the guide piece 19. A fully covering layer of lubricant 26 (Figure 3) then forms between the blade 14 and the guide piece 19. The said layer keeps the blade 14 effectively off the guide piece 19, so that the blade 14 can be guided precisely. This improves the sawing result and reduces the wear in the guide piece. At the same time, the blade does not heat as much and the blades remain clean. Figure 3 shows the operation of the blade guide 17. The lubricant 24 used is usually a mixture of compressed air and water, which is led to the rear of the guide piece 19, through the series of lubricant channels 23 of the blade guide 17. A water emulsion can also be used. The lubricant 24 discharges trought the through hole 22 in the guide piece 19 into the pressure pocket 25. In practice, an extensive air cushion is formed, which is sealed by the water brought with the compressed air. The air cushion can also be used to direct greater force than previously onto the blade. This reduces the oscillation of the blade. In addition, the blade remains clear of the guide piece, eliminating wear in the guide piece and scratching of the blade. The sealing of the air cushion is also promoted by a sufficiently large ring surface 31, which delimits the pressure pocket 25 on the surface 19' on the side of the guide piece 19 facing the blade 14. Generally, the surface area of the ring surface is 1 - 5 times, preferably 2 - 4 times the surface area of the pressure pocket.

Figures 2 and 3 also show the guide pieces 19, in which, in addition to the pressure pocket 25, a distribution pocket 27 is arranged on the surface 19" on the side of the guide piece 19 facing the guide frame 20. The lubricant 24 is led from the series of lubricant channels 23 to the distribution pocket 27 and from there through the through hole 22 in the guide piece 19 to the pressure pocket 25. The shape of the distribution pocket can be selected more freely than that of the pressure pocket, but its volume is preferably greater than that of the pressure pocket. The distribution pocket then acts as a kind of intermediate reservoir, from which lubricant can rapidly reach the pressure pocket. Thus, the pressure pocket alway remains full, despite small leaks or other disturbances in operation. Generally, the volume of the distribution pocket is 0,5 - 3 times, preferably 1 - 2 times greater than the volume of the pressure pocket. As the blade approaches the guide piece, the air cushion becomes thinner while nevertheless remaining extensive, thanks to the pressure pocket. It is then rare for the blade to strike the guide piece. The operation of the distribution pocket is made possible by the small size of the through hole. In addition, the consumption of lubricant is then moderate, though the layer is nevertheless extensive. Generally, the cross-sectional area of the through hole is 1 - 5 %, preferably 2 - 3 % of the cross-sectional area of the pressure pocket.

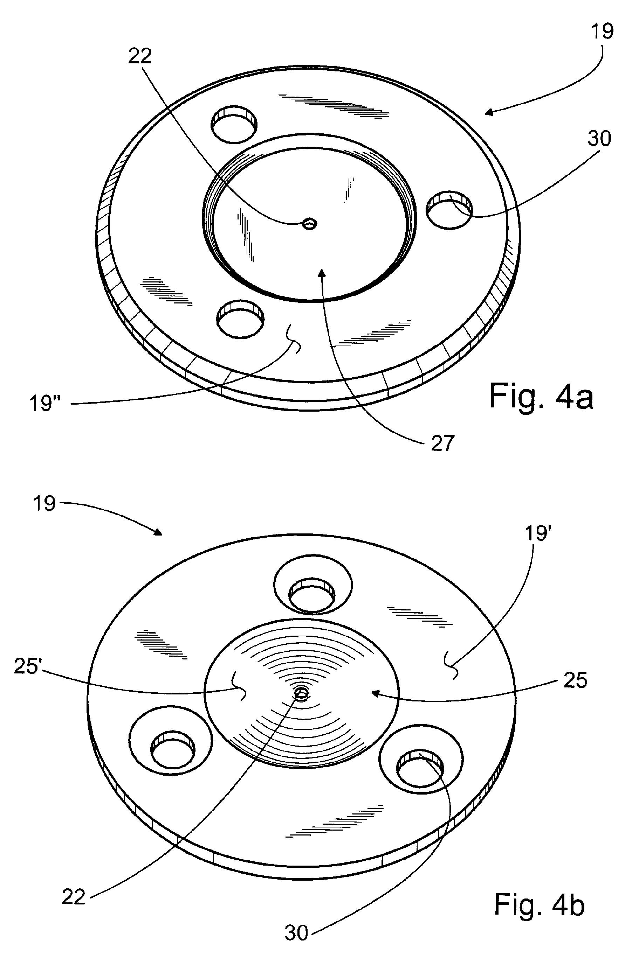

Figures 4a - 5c show perspective views of guide pieces 19 according to the invention. The figures also show holes 30 for securing the guide pieces 19 with screws (not shown). Generally, the open surface area of the pressure pocket is 4 - 12 cm², preferably 6 - 10 ²cm. In that case, when using a pressure of 5 bar, for example, in the series of lubricant channels, a surface area of 8 cm² will be achieved with a force of 400 N on both sides of the blade. As the blade inevitably moves axially to some extent, the gap between the blade and the guide piece varies. As the blade presses against the layer of lubricant, the pressure increases. The guiding force increases simultaneously, so that the blade is guided gently by the blade guide.

The pressure pocket, like the guide piece, has an essentially circular cross-section. This facilitates manufacture. Generally, the depth of the pressure pocket from the surface of the guide piece is 1 - 6 mm, preferably 2 - 4 mm. The pressure pocket then achieves a sufficient volume to form an adequate air cushion. In addition, the pressure pocket extends to the surface of the guide piece, so that the lubricant spreads evenly over the area of the guide piece. According to the embodiments, the pressure pocket 25 forms a spherical surface 25' opening towards the blade 14, which is concentric with the through hole 22. The lubricant is then distributed evenly and dirtying areas do not form in the guide piece.

Though the wear in a guide piece according to the invention is considerably less than in a known guide piece, it is preferable to manufacture the guide piece from a wear-resistant material. Such a preferable material is, for example, a hard metal alloy. Alternatively, the guide piece can be manufactured from plastic, for instance. Plastic can be used especially if the guide piece has a wear-resistant coating. The coating can be, for example, diamond, ceramic, or PTFE plastic.

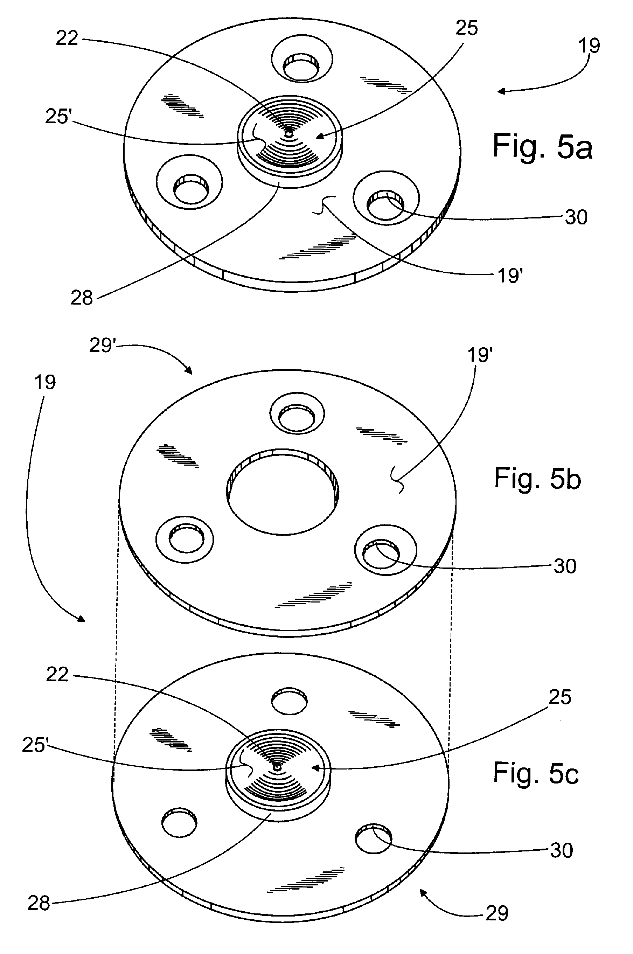

Large blades in particular may have considerable deflection. It may then be possible for the deflection to cause the blade to strike the guide piece. To prevent this, the pressure pocket 25 is arranged within a boss 28 formed in the surface of the guide piece 19, according to Figure 5a. The pressure pocket 25 in the guide piece 19 shown is smaller than the previous one. The guiding force created is then also smaller. Due to this, a raised pressure pocket is used mainly in the inner guide pieces, in which less guiding force required is required, but where the blade deflection is greater (Figure 1b).

To facilitate manufacture and servicing, the guide piece 19 is preferably made of two pieces. This is shown in Figures 5b and 5c. In this case, the guide piece 19 is formed of two concentric pieces, with the pressure pocket 25 being arranged in the guide-frame 20 side piece 29. Correspondingly, the second piece 29' is an attachment and support piece. The attachment and support piece is preferably manufactured from, for example, hard metal alloy. Correspondingly, the piece 29 containing the pressure pocket 25 is easily manufactured from plastic. The same reference numbers are used for operationally similar components.

Using a blade guide according to the invention, the blade can be guided precisely without oscillations. The machining finish is then better than previously. The reduced oscillation also permits the use of smaller sawing tolerances, which improves the quality and yield of the sawn goods. Thanks to the pressure pocket, the guide piece does not wear, so that the need for servicing is minimal. In addition, the guide piece can be made from different materials. It is then possible to manufacture suitable guide pieces for each application. In addition to the embodiment, the blade guide according to the invention is also suitable for use with other kinds of blade, such as band-saw blades. The saw machine itself may be other than a machine for sawing timber.

## Claims

1. A blade guide for a saw machine, which saw machine includes one or several blades (14), the blade guide (17) being arranged to extend on both sides of which to guide the blade (14) during sawing, and which blade guide (17) includes a guide frame (20) equipped with a series of lubrication channels (23) and having in it at least one guide piece (19) to be pressed against the blade (14), in which there is a through hole (22) for leading a lubricant (24) through the series of lubrication channels (23) in the guide frame (20) between the guide piece (19) and the blade (14), characterized in that a pressure pocket (25) is arranged in the side (19') of the guide piece (19) facing the blade (14), in order to form an fully covering lubricant layer (26) between the blade (14) and the guide piece (19).

2. A blade guide according to Claim 1, characterized in that the pressure pocket (25) is bounded by a ring surface (31) of the surface (19') of the guide piece (19) facing the blade (14), the surface area of which is 1 - 5, preferably 2 - 4 times the surface area of the pressure pocket (25).

3. A blade guide according to Claim 1 or 2, characterized in that the open surface area of the pressure pocket (25) is 4 - 12 cm², preferably 6 - 10 cm².

4. A blade guide according to one of Claims 1 - 3, characterized in that the cross-section of the pressure pocket (25) is essentially round.

5. A blade guide according to one of Claims 1 - 4, characterized in that the depth of the pressure pocket (25) from the surface (19') of the guide piece (19) is 1 - 6 mm, preferably 2 - 4 mm when the pressure pocket (25) extends in to the surface (19') of the guide piece (19).

6. A blade guide according to Claim 5, characterized in that the pressure pocket (25) forms a spherical surface (25') opening towards the blade (14), which is set concentrically with the through hole (22).

7. A blade guide according to one of Claims 1 - 6, characterized in that the guide piece (19) is made of a wear-resistant material, preferably a hard metal alloy or plastic, and/or there is a wear-resistant coating on the guide piece (19), which is preferably diamond, ceramic, or PTFE plastic.

8. A blade guide according to one of Claims 1 - 7, characterized in that the pressure pocket (25) is arranged in a boss (28) formed in the surface (19') of the guide piece (19).

9. A blade guide according to one of Claims 1 - 8, characterized in that the guide piece (19) is formed of two concentric pieces (29, 29'), the pressure pocket (25) being arranged in the piece (29) facing the guide frame (20), the other piece (29') being an attachment or support piece.

10. A blade guide according to one of Claims 1 - 9, characterized in that the cross-sectional surface area of the through hole (22) is 1 - 5 %, preferably 2 - 3 % of the cross-sectional area of the pressure pocket (25).

11. A blade guide according to one of Claims 1 - 10 characterized in that a distribution pocket (27) is arranged in the surface (19") of the guide piece (19) facing the guide frame (20), in order to lead lubricant (24) from the series of lubricant channels (23) through the through hole (22) to the pressure pocket (25).

12. A blade guide according to Claim 11, characterized in that the volume of the distribution pocket (27) is 0,5 - 3 times, preferably 1 - 2 times the volume of the pressure pocket (25).
